# FASCICULE DE BREVET EUROPEEN

(11) **EP 4 175 014 B1**
(45) Date de publication et mention de la délivrance du brevet: **21.08.2024**
(21) Numéro de dépôt: 22202940.7
(22) Date de dépôt: 21.10.2022
(51) Int. Cl.: H01M 10/48, H01M 50/536, H01M 50/569, H01M 4/66, H01M 50/414, H01M 50/417, H01M 50/423, H01M 50/103, H01M 50/105, H01M 10/0525, H01M 10/054

(54) **COLLECTEUR DE COURANT D'UN ÉLÉMENT D'INSTRUMENTATION D'UN SYSTÈME ÉLECTROCHIMIQUE AVEC JONCTION OBTENUE PAR SCELLAGE THERMIQUE D'UN POLYMÈRE THERMOFUSIBLE À UNE BANDE ÉLECTRIQUEMENT CONDUCTRICE SUPPORTÉE PAR LE SÉPARATEUR ÉLECTRIQUEMENT ISOLANT DU SYSTÈME**
STROMABNEHMER EINES INSTRUMENTIERUNGSELEMENTS EINES ELEKTROCHEMISCHEN SYSTEMS MIT DURCH WÄRMEVERSIEGELUNG EINES HEISSSCHMELZPOLYMERS AN EINEM ELEKTRISCH LEITENDEN BAND GESTÜTZTEN ELEKTRISCH LEITENDEN BAND.
ELECTROCHEMICAL SYSTEM INSTRUMENTATION CURRENT COLLECTOR WITH THERMALLY SEALED JUNCTION OF A HOT MELT POLYMER TO AN ELECTRICALLY CONDUCTIVE WEB SUPPORTED BY THE SYSTEM ELECTRICALLY INSULATIVE SEPARATOR.

(30) Priorité: 26.10.2021 FR 2111375
(43) Date de publication de la demande: 03.05.2023
(73) Titulaire: Commissariat à l'énergie atomique et aux énergies alternatives, 75015 Paris (FR)
(72) Inventeur: SALOMON, Jérémie, 38054 Grenoble Cedex 09 (FR); GENIES, Sylvie, 38054 Grenoble Cedex 09 (FR); LEYS, Côme-Emmanuel, 38054 Grenoble Cedex 09 (FR)
(74) Mandataire: Cabinet Nony

(56) Documents cités:
- EP-A1- 3 713 005
- CN-A- 106 785 068
- CN-A- 108 198 991
- KR-A- 20140 137 719
- US-A1- 2021 242 520

## Description

### Domaine technique

La présente invention concerne le domaine des systèmes électrochimiques, et notamment ceux comprenant un emballage pour garantir l'étanchéité du coeur vis-à-vis de l'extérieur.

Plus particulièrement, il peut s'agir de générateurs électrochimiques métal-ion, qui fonctionnent selon le principe d'insertion ou de désinsertion, ou autrement dit intercalation-désintercalation, d'ions métal dans au moins une électrode.

Elle concerne plus particulièrement un accumulateur électrochimique au lithium ou lithium-ion instrumenté au moyen d'un élément d'instrumentation intégré au séparateur de l'accumulateur.

L'invention a trait en particulier à la réalisation d'une jonction électroniquement conductrice entre un élément d'instrumentation intégré au séparateur et sa connexion externe (auxiliaire) à l'emballage de l'accumulateur.

Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique, par exemple le lithium-soufre ou le lithium-air.

### Technique antérieure

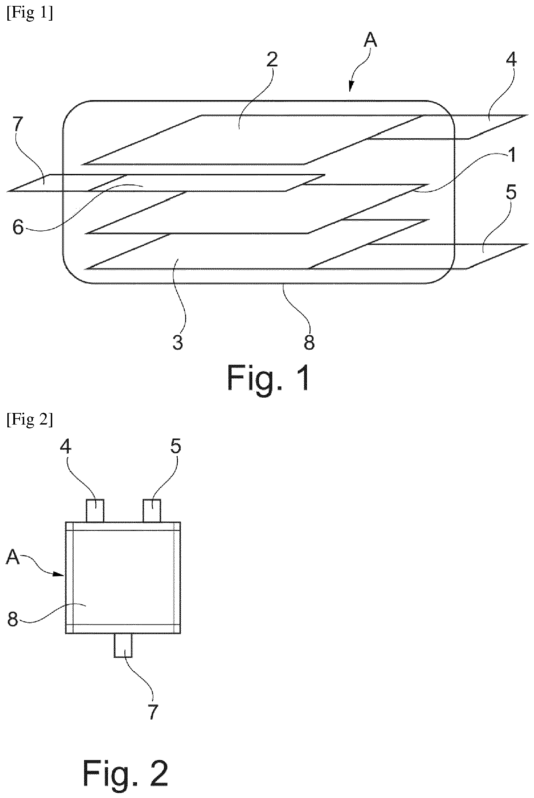

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à l'anode 3, un élément d'instrumentation 6 intercalé entre le constituant électrochimique 1 et l'une des deux électrodes 2 ou 3, en l'occurrence l'électrode positive 2 sur la figure 1, un collecteur de courant 7 connecté à l'élément d'instrumentation 6, et enfin, un emballage 8 agencé pour contenir la cellule électrochimique avec étanchéité tout en étant traversé par une partie des collecteurs de courant 4, 5, 7 formant les bornes de sortie (borne positive 4, borne négative 5 et borne auxiliaire 7).

L'élément d'instrumentation 6 peut être une électrode de référence pour suivre l'évolution de la tension de chacune des électrodes 2, 3 ou un capteur pour suivre l'évolution de la température ou de la pression ou autre grandeur physique au coeur du système électrochimique.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous cette dernière forme, le constituant peut comprendre un séparateur en polymère, en céramique ou en composite microporeux imbibé d'électrolyte (s) organique (s) ou de type liquide ionique qui permet le déplacement des ions Lithium de la cathode à l'anode pour une charge et inversement pour une décharge, ce qui génère le courant. Le séparateur peut être en polyoléfine (PP, PE ou multicouches PP et PE, ou autres). L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme le phosphate de fer lithié LiFePO₄, l'oxyde de cobalt lithié LiCoO₂ l'oxyde de manganèse lithié, éventuellement substitué, LiMn₂O₄ ou d'oxyde de métaux de transition, comme les matériaux lamellaires par exemple, un matériau à base de LiNiₓMnᵥCo_{z}O₂ avec x+y+z = 1, tel que LiNi_{0.33}Mn_{0.33}Co_{0.33}O₂ appelé plus communément NMC111, LiNi_{0.6}Mn_{0.2}Co_{0.2}O₂ appelé plus communément NMC622 ou LiNi_{0.8}Mn_{0.1}Co_{0.1}O₂ appelé plus communément NMC811 ou un matériau à base de type oxyde de nickel cobalt aluminium LiNiₓCo_{y}Al_{z}O₂ avec x+y+z = 1, tel que LiNi_{0.8}Co_{0.15}Al_{0.05}O₂ appelé plus communément NCA.

L'électrode négative ou anode est très souvent constituée de carbone, graphite ou en Li₄TiO₅O₁₂ (matériau titanate), éventuellement également à base de silicium ou à base de lithium, ou à base d'étain et de leurs alliages ou de composite formé à base de silicium.

L'électrode négative tout comme l'électrode positive peut également contenir des additifs conducteurs électroniques ainsi que des additifs polymères qui lui confèrent des propriétés mécaniques et des performances électrochimiques appropriées à l'application batterie lithium-ion ou à son procédé de mise en oeuvre.

Les électrodes, positive et négative, sont classiquement fabriquées par enduction, en déposant en continu une encre, contenant le matériau actif, un solvant, un liant et éventuellement un additif électriquement conducteur, sur les collecteurs de courant. La technique la plus couramment utilisée est la technique dite d'enduction avec une fente filière (ou « slot die » en anglais). Concrètement, un feuillard métallique destiné à former le collecteur de courant défile entre un rouleau d'entrainement et une filière en forme de fente de distribution, reliée à un réservoir contenant l'encre. Une couche d'encre est ainsi formée sur le feuillard métallique, dans sa portion centrale, les bandes latérales (ou rives) du feuillard restant nues. Le solvant est, ensuite, évaporé lors d'un séchage en ligne pour former l'électrode. Une étape de séchage est ensuite réalisée pour évaporer les résidus de solvant. Puis une étape de calandrage est réalisée pour diminuer la porosité et augmenter la conductivité de l'électrode.

Le collecteur de courant 4 connecté à l'électrode positive est en général en aluminium.

Le collecteur de courant 5 connecté à l'électrode négative est en général en cuivre, en cuivre nickelé ou en aluminium.

Le collecteur de courant 7 est en général en aluminium, en cuivre, en nickel, en cuivre nickelé ou en acier inoxydable. La nature du métal choisi pour ce collecteur 7 dépend de la nature du couple électrochimique utilisé en tant que référence. Le métal doit être électrochimiquement stable dans le domaine de potentiel de fonctionnement du couple électrochimique de référence.

Plus précisément, l'aluminium est utilisé pour les collecteurs de courant communs à des électrodes positive et négative de titanate Li₄Ti₅O₁₂. Le cuivre est plutôt pour les électrodes négatives de graphite (Cgr), de silicium (Si) ou de composite silicium (Si-C).

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement entre 1,5 et 4,2 Volt.

Selon le type d'application visée, on cherche à réaliser soit un accumulateur lithium-ion fin et flexible soit un accumulateur rigide : l'emballage est alors soit souple soit rigide et constitue dans ce dernier cas en quelque sorte un boitier.

Les emballages rigides (boitiers) sont usuellement fabriqués à partir d'un matériau métallique, typiquement un alliage d'aluminium ou en acier inoxydable ou d'un polymère rigide comme par exemple l'acrylonitrile butadiène styrène (ABS).

Les emballages souples sont usuellement fabriqués à partir d'un matériau composite multicouche constitué d'une feuille d'aluminium recouverte par un ou plusieurs film(s) en polymère laminés par collage. Dans la plupart de ces emballages souples, le polymère recouvrant l'aluminium est choisi parmi le polyéthylène (PE), le polypropylène (PP), le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N° ADR-0N25/AL40/CPP80.

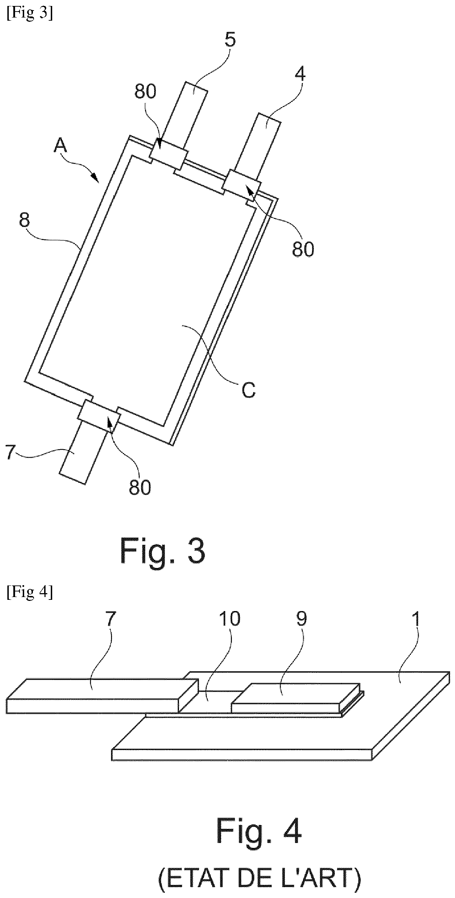

La figure 3 illustre ce type d'emballage souple 8 qui est agencé pour isoler et étanchéifier la cellule électrochimique C tout en étant traversé par une partie de trois lamelles ou languettes 4, 5, 7 communément appelée en anglais « tab », formant les pôles et une borne auxiliaire qui s'étendent dans le plan de la cellule électrochimique. Comme montré en figure 3, des renforts en polymère 80 à base de polyoléfine peuvent être prévus pour améliorer le scellage à chaud de l'emballage 8 autour des lamelles 4, 5 et 7.

L'avantage principal des emballages souples est leur légèreté. Les accumulateurs Li-ion avec les plus grandes densités d'énergie comportent de ce fait un emballage souple. L'inconvénient majeur de ces emballages souples est que leur étanchéité peut se détériorer fortement au cours du temps du fait de la non-tenue chimique du scellage réalisé.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

L'avantage principal des emballages rigides est ainsi leur étanchéité élevée et maintenue au cours du temps du fait que la fermeture des boitiers est réalisée par soudure, en générale par soudure au laser.

Pour obtenir un fonctionnement optimal des accumulateurs Li-ion, la ou les cellules électrochimiques doi(ven)t être étanche(s) vis-à-vis de l'humidité de l'air. Pour garantir cette étanchéité au niveau des connections externes de l'accumulateur, les fabricants utilisent des rivets ou procèdent par soudure laser dans le cas d'un emballage rigide.

Dans le cas d'un accumulateur à cellule électrochimique instrumentée, l'étanchéité au niveau de la connexion externe de l'élément d'instrumentation doit également être assurée.

Pour un emballage rigide, le collecteur de courant de l'élément d'instrumentation est connecté par soudure laser ou électrique à une borne auxiliaire externe.

Pour un emballage souple, le collecteur de courant de l'élément d'instrumentation est connecté par soudure électrique ou par ultrasons à une languette métallique avec renfort polymère à base de polyoléfine.

Dans une configuration particulière, l'élément d'instrumentation est avantageusement intégré au séparateur de la cellule électrochimique pour les raisons suivantes :
- exercer la fonction de contrôle par l'instrumentation au coeur du système électrochimique,
- réduire l'épaisseur de l'élément d'instrumentation incorporé dans la cellule pour éviter la surépaisseur qui peut nuire au bon fonctionnement de la cellule,
- faciliter le procédé de fabrication de la cellule instrumentée : en effet, un élément d'instrumentation qui serait rapporté en tant qu'élément supplémentaire lors du procédé d'assemblage des composants compliquerait ce dernier.

Dans sa forme finale, la languette métallique connectant électriquement un élément d'instrumentation au sein du coeur électrochimique est de préférence pris en sandwich entre deux couches de polymère, afin d'être protégé électriquement sur ses deux faces extérieures. Dans l'article [1], un séparateur bifonctionnel est fabriqué en empilant deux couches de polymères poreux classiques de 12 µm d'épaisseur dont l'une est revêtue au préalable d'une couche de cuivre de 50 nm d'épaisseur, déposée par pulvérisation par faisceau d'onde (en anglais « Ion-beam Sputtering » (IBS)) sans chauffage supplémentaire, car le séparateur est sensible à la chaleur. La couche de cuivre déposée permet de détecter une amorce de court-circuit par la différence de potentiel entre l'électrode négative de l'accumulateur et le collecteur en cuivre qui devient nulle si une dendrite entre en contact avec le cuivre.

Telle qu'illustrée schématiquement en figure 4, un élément d'instrumentation 9 intégré au séparateur 1 est reliée électriquement à un collecteur de courant 7 au moyen d'une couche conductrice de courant 10 sous la forme d'une bande qui est déposée directement sur le séparateur 1, tel que décrit dans le brevet US6767581B1. Le brevet EP 3 713 005 A1 divulgue un autre arrangement pour relier une électrode de référence à un séparateur.

La bande électriquement conductrice 10 est déposée préférentiellement par un procédé de pulvérisation sous vide. Elle peut être également réalisée par une technique de dépôt chimique en phase vapeur (CVD pour « Chemical Vapor Déposition » en anglais), par enduction, impression, jet d'encre, spray ou tout autre procédé qui permet de déposer une encre conductrice sur un support. La bande conductrice 10 est de préférence en or. Elle peut être également en aluminium, en cuivre, en nickel, en cuivre nickelé ou en carbone.

La réalisation de cette liaison électrique n'est pas complètement satisfaisante : en effet, il n'est pas possible, à tout le moins difficilement, de réaliser une soudure électrique, par laser ou ultrason entre la bande conductrice déposée sur le séparateur et le collecteur de courant sans dégrader le séparateur qui est généralement un polyoléfine (PP, PE ou multicouches PP et PE, ou autre). En outre, la soudure est intrinsèquement délicate car le dépôt de la bande conductrice est généralement très fin.

Il n'est pas possible non plus de réaliser cette liaison électrique en utilisant une colle conductrice ou une pâte conductrice qui contient le plus souvent des agents conducteurs métalliques, principalement en argent, cuivre ou nickel, par risque d'oxydation du métal au potentiel de la cathode. De plus ces colles ou pâtes peuvent nécessiter un traitement thermique pour fritter le métal (généralement supérieur à 100°C), ce qui peut endommager le séparateur.

Il existe donc un besoin d'améliorer la liaison électrique entre un collecteur de courant et une bande conductrice de courant déposée directement sur un polymère d'un système électrochimique, notamment un séparateur d'un accumulateur au lithium, et plus généralement métal-ion, et qui relie électriquement un élément d'instrumentation de l'accumulateur au collecteur de courant, et ce, en ne nuisant pas à l'étanchéité du système.

Le but de l'invention est de répondre au moins en partie à ce besoin.

### Exposé de l'invention

Pour ce faire, l'invention concerne, sous l'un de ses aspects, un système électrochimique comprenant:
- au moins un film de polymère isolant électriquement;
- au moins une bande électriquement conductrice déposée directement sur le film de polymère isolant électriquement;
- au moins une languette formant un collecteur de courant scellé thermiquement à la bande électriquement conductrice par un polymère thermofusible et électriquement conducteur.

Par « électriquement conducteur/conductrice », on entend ici et dans le cadre de l'invention, une conductivité supérieure ou égale à 1S/cm.

Par « film de polymère électriquement isolant », on entend ici et dans le cadre de l'invention, un isolant électrique, conducteur ionique formé par au moins un matériau polymère. Le film de polymère électriquement isolant peut être un séparateur d'une cellule électrochimique du système.

Chaque film de séparateur est découpé selon le motif souhaité par un procédé mécanique ou par laser.

Le film de polymère électriquement isolant est de préférence un film microporeux polymère monocouche ou multicouches à base de polyoléfine, de préférence en polypropylène (PP) et ses dérivés ou/et en polyéthylène (PE) et ses dérivés.

Le film polyoléfine contient une bande conductrice de courant qui est avantageusement sous forme d'une fine couche d'un matériau conducteur métallique ou carboné formant la bande conductrice. La fine couche de ce matériau est de préférence déposée par procédé de pulvérisation sous vide. La fine couche de ce matériau peut également être déposée par enduction, impression, jet d'encre, spray ou tout autre procédé permettant de déposer une encre conductrice.

Selon une première variante de réalisation, le polymère thermofusible et électriquement conducteur est un élastomère de type polypropylène (PP) et ses dérivés et/ou polyéthylène (PE) et ses dérivés.

Selon une deuxième variante de réalisation, le polymère thermofusible et électriquement conducteur est un thermoplastique de type polyamide (PA) ou poly(téréphtalate d'éthylène) (PET) ou polyéther éther cétone (PEEK) et ses dérivés ou polysulfone (PS) et ses dérivés.

L'emballage d'un système selon l'invention peut être rigide ou souple.

Selon un mode de réalisation particulièrement avantageux, la bande conductrice peut être métallique et déposée au sein d'un séparateur tri-couches de type PP/PE/PP ou bien en surface du séparateur avec un revêtement céramique, la bande conductrice métallique étant déposée avant le dépôt de la couche céramique. Dans ce dernier cas, en dehors du système, le dépôt métallique de la bande conductrice n'est pas recouvert afin de pouvoir réaliser le contact électrique avec le collecteur de courant.

De préférence, le polymère thermofusible électriquement conducteur est un composé comprenant un polymère qui d'une part a la capacité de se ramollir sous l'effet de la chaleur et de redevenir dur en refroidissant, et d'autre part comprend au moins une charge électriquement conductrice de préférence à base de carbone pour qu'il soit électriquement conducteur.

Avantageusement, la charge électriquement conductrice à base de carbone est choisie parmi le noir de carbone, les fibres de carbone, les nanotubes de carbone, le graphite, le graphène et leurs dérivés, ou un mélange de ces composés carbonés. La charge peut également être à base d'un métal, de préférence sous la forme de fils métalliques en aluminium, cuivre ou nickel.

Le taux de chargement en charge électriquement conductrice du polymère thermofusible est avantageusement compris entre 5 et 95 % de la masse totale du composé, avantageusement encore compris entre 15 et 55 % massique et encore plus avantageusement entre 25 et 45 % de la masse totale du composé.

De préférence encore, le polymère thermofusible est un élastomère de type polypropylène (PP) et ses dérivés ou polyéthylène (PE) et ses dérivés. Il peut être aussi un thermoplastique de type polyamide (PA) ou poly(téréphtalate d'éthylène) (PET) ou polyéther éther cétone (PEEK) et ses dérivés ou polysulfone (PS) et ses dérivés ou tout autre type de polymère qui se ramollit sous l'effet de la chaleur et redevient dur en refroidissant.

Un polymère thermofusible et électriquement conducteur avantageux est déjà disponible commercialement sous la forme de granulés (ou « masterbatch » en anglais), par exemple sous la référence « *PP Black Masterbatch-MBB1231* » au nom de la compagnie CHUANGDA PLASTIC INDUSTRY CO., LIMITED, de composition polymère en PP chargé en noir de carbone à un pourcentage massique de 35% +/- 3%, ou sous la référence *« CC00024002BG* - *46-BK-80 BK PP MASTERBATCH »* au nom de la compagnie POLYONE, de composition polymère en PP chargé en noir de carbone à un pourcentage massique de 40%.

Pour réaliser le scellage thermique, des granulés du polymère thermofusible peuvent être directement utilisés. Alternativement, un film peut être avantageusement mis en oeuvre préalablement au scellement thermique en utilisant par exemple une presse chauffante ou en procédant par extrusion.

Un film polymère thermofusible et électriquement conducteur mis en oeuvre par pressage à chaud ou par extrusion a avantageusement une épaisseur comprise entre 20 et 500 µm, et plus avantageusement comprise entre 50 et 200 µm.

De préférence, la languette formant le collecteur de courant est métallique, de préférence encore en aluminium, en cuivre, en nickel, en cuivre nickelé, ou en acier inoxydable. Le collecteur de courant peut être dense ou poreux comme par exemple une grille et peut être traité en surface pour améliorer l'adhésion. Il a une épaisseur de préférence comprise entre 6µm et 500µm. De préférence encore, le collecteur de courant est en aluminium dont au moins l'une des faces est traitée par gravure. De préférence encore, il s'agit d'aluminium pur à 99,85% (alliage de référence 1085).

Ainsi, l'invention consiste essentiellement à réaliser un scellage thermique pour assurer le contact électrique entre la bande conductrice et le collecteur de courant en utilisant un polymère thermofusible électriquement conducteur.

L'invention a également pour objet un accumulateur électrochimique (A) métal-ion constitué à partir d'un système électrochimique étanche décrit précédemment, comprenant un empilement des éléments suivants:
- au moins une électrode négative;
- au moins une électrode positive;
- au moins un film de séparateur isolant électriquement, intégrant un électrolyte, agencé en contact avec l'électrode négative et l'électrode positive;
- au moins une bande électriquement conductrice déposée directement sur le film de polymère isolant électriquement ;
- au moins un élément d'instrumentation de l'accumulateur, supporté par le film de séparateur et relié électriquement à la bande électriquement conductrice ;
- au moins une languette formant un collecteur de courant scellé thermiquement par un polymère électriquement conducteur à la bande électriquement conductrice ;
- un emballage souple agencé pour contenir les électrodes négative et positive, le film de séparateur, l'élément d'instrumentation et la bande électriquement conductrice, avec étanchéité tout en étant traversé par le collecteur de courant, un ruban d'étanchéité étant soudé au collecteur de courant et scellé thermiquement à l'emballage souple.

La soudure du ruban d'étanchéité au collecteur de courant peut être réalisé par soudure ultrasons.

Dans le cas d'un ruban d'étanchéité rapporté, celui-ci est choisi de préférence parmi un polyéthylène (PE) ou un polypropylène (PP). La largeur d'un ruban d'étanchéité est de préférence comprise entre 0,5 et 1 cm. L'épaisseur d'un ruban d'étanchéité est de préférence comprise entre 0,05 et 0,2 mm.

L'emballage souple peut être agencé pour être traversé avec étanchéité par un premier et un deuxième pôles de l'accumulateur constitués chacun par une languette conductrice.

En ce qui concerne la réalisation de la connexion externe, pour chaque électrode négative ou positive, on réalise la fixation d'une languette métallique destinée à former la connexion externe ou pôle d'un accumulateur. La fixation a lieu par soudure de la languette métallique sur les collecteurs de courant des électrodes, de préférence par soudure ultra-sons. Les languettes sont en général en nickel lorsqu'elles sont fixées sur un collecteur en cuivre et en aluminium lorsqu'elles sont fixées sur un collecteur en aluminium.

Dans le cas où l'accumulateur comprend une seule cellule électrochimique, la connexion externe peut aussi être assurée directement par les collecteurs de courant des électrodes qui sont découpées selon une forme de languette.

Comme précisé ci-avant, afin de garantir l'étanchéité de l'accumulateur, quelle que soit la forme retenue pour les pôles, un ruban d'étanchéité est utilisé celui-ci pouvant être soit laminé-collé sur la languette métallique formant le collecteur de courant (languette vendue avec le ruban d'étanchéité) soit rapporté et fixé entre l'emballage et chaque face principale du collecteur de courant dans le cas où la connexion externe est assurée directement par les collecteurs de courant. Le ruban d'étanchéité peut être comme celui utilisé pour le collecteur de courant de l'élément d'instrumentation.

De préférence, le ruban d'étanchéité est à base de polymère thermofusible. Mais on peut aussi envisager tout autre matériau d'étanchéité, tel qu'une colle, du verre, à la condition qu'il soit compatible avec l'électrolyte du système électrochimique.

L'emballage souple d'un accumulateur selon l'invention est de préférence constitué d'un sachet souple unique. Il peut être fabriqué à partir d'un matériau composite multicouche constitué d'une feuille d'aluminium recouverte par un ou plusieurs film(s) en polymère laminés par collage. Le polymère recouvrant l'aluminium peut être choisi parmi le polyéthylène (PE), le polypropylène (PP), le polyamide (PA) ou peut être sous la forme d'une couche adhésive constituée de polyester-polyuréthane. La société Showa Denko commercialise ce type de matériaux composite pour une utilisation en tant qu'emballage de batteries sous les références NADR-0N25/AL40/CPP40 ou N ° ADR-0N25/AL40/CPP80. Ainsi, le sachet souple conforme à l'invention est avantageusement à base d'un film multicouches aluminisé, étanche à l'air.

Afin de procéder au scellement du sachet souple par scellage thermique, on peut tout d'abord sceller thermiquement trois côtés du sachet tout en laissant ouvert le quatrième côté pour l'activation de l'accumulateur par remplissage de l'électrolyte puis, une fois ce remplissage effectué, on scelle thermiquement le quatrième côté, les languettes métalliques traversant le scellement.

L'invention a également pour objet un accumulateur électrochimique (A) métal-ion constitué à partir d'un système électrochimique étanche décrit précédemment, comprenant un empilement des éléments suivants:
- au moins une électrode négative;
- au moins une électrode positive;
- au moins un film de séparateur isolant électriquement, intégrant un électrolyte, agencé en contact avec l'électrode négative et l'électrode positive;
- au moins une bande électriquement conductrice déposée directement sur le film de polymère isolant électriquement ;
- au moins un élément d'instrumentation de l'accumulateur, supporté par le film de séparateur et relié électriquement à la bande électriquement conductrice ;
- au moins une languette formant un collecteur de courant scellé thermiquement par un polymère électriquement conducteur à la bande électriquement conductrice ;
- un emballage rigide, agencé pour contenir les électrodes négative et positive, le film de séparateur, l'élément d'instrumentation et la bande électriquement conductrice, le collecteur de courant étant soudé à une borne de sortie auxiliaire de l'emballage rigide.

La soudure à la borne de sortie auxiliaire peut être avantageusement réalisée par soudure électrique ou laser.

L'accumulateur selon l'invention peut être un accumulateur Li-ion, les électrodes étant en matériau d'insertion du lithium.

Par « électrode en matériau d'insertion au Lithium », on entend ici et dans le cadre de l'invention, une électrode comportant au moins un matériau d'insertion au lithium et au moins un liant en polymère. Eventuellement, l'électrode peut comprendre en plus un conducteur électronique, par exemple des nanofibres de carbone, des nanotubes fibres de carbone ou du noir de carbone.

Par « matériau d'insertion au lithium », en particulier pour l'électrode positive, on entend ici et dans le cadre de l'invention, un matériau choisi parmi les oxydes lithiés comprenant du manganèse de structure spinelle, les oxydes lithiés de structure lamellaire et les mélanges de ceux-ci, les oxydes lithiés à charpentes polyanioniques de formule LiMy(XOz)n avec M représentant un élément choisi parmi Mn, Fe, Co, Ni, Cu, Mg, Zn, V, Ca, Sr, Ba, Ti, Al, Si, B et Mo, X représentant un élément choisi parmi P, Si, Ge, S et As, y, z et n étant des entiers positifs.

Par « matériau d'insertion au lithium », en particulier pour l'électrode négative, on entend également un matériau choisi parmi: oxyde de titane lithié ou non, par exemple Li₄Ti₅O₁₂ ou TiO₂, graphite, silicium, ou composite de silicium. Plus particulièrement, le matériau d'électrode négative peut être choisi parmi les matériaux carbonés, les oxydes de titane non lithiés et leurs dérivés et les oxydes de titane lithiés tels que Li₄Ti₅O₁₂ et leurs dérivés et un mélange de ceux-ci.

Par « dérivé lithié », on entend ici et dans le cadre de l'invention, des composés de formule Li(₄₋ₓ₁)Mₓ₁Ti₅O₁₂ et Li₄Ti(_{5-y1})N_{y1}O₁₂, où x1 et y1 sont respectivement compris entre 0 et 0,2 et M et N sont respectivement des éléments chimiques choisis parmi Na, K, Mg, Nb, Al, Ni, Co, Zr, Cr, Mn, Fe, Cu, Zn, Si et Mo.

Par « dérivé non lithié », on entend ici et dans le cadre de l'invention, Ti(_{5-y1})N_{y1}O₁₂, avec y1 compris entre 0 et 0,2 et N est un élément chimique choisi parmi Na, K, Mg, Nb, Al, Ni, Co, Zr, Cr, Mn, Fe, Cu, Zn, Si et Mo.

De préférence, les anodes sont en graphite et les cathodes en LiNixCoyMn(_{1-x-y})O₂ (NCM).

Comme évoqué précédemment, le séparateur est de préférence un film microporeux polymère monocouche ou multicouche à base de polyoléfine PP ou/et PE. Chaque film de séparateur est découpé selon le motif souhaité par un procédé mécanique ou par laser.

L'électrolyte selon l'invention, peut être un liquide formé par un mélange de carbonate et au moins un sel de lithium. Par « sel de Lithium », on entend de préférence, un sel choisi parmi LiPF₆, LiClO₄, LiBF₄ et LiAsF₆.

Alternativement, l'électrolyte peut comprendre un ou plusieurs liquide ionique, à base d'ions lithium, à savoir un sel constitué de cations lithium, complexés avec des anions inorganiques ou organiques, qui a pour propriété d'être à l'état liquide à température ambiante. Un liquide ionique, selon la nature de l'anion, peut être hydrophile ou hydrophobe. A titre d'exemples de liquides ioniques, on peut citer des liquides ioniques à base d'anions hydrophobes comme le trifluorométhanesulfonate (CF₃SO₃), bis (trifluorométhanesulfonate imide [(CF₃SO₂)₂N] et tris(trifluorométhanesulfonate) méthide [(CF₃SO₂)₃C].

De préférence, la surface de l'électrode négative est supérieure à la surface de l'électrode positive. On s'assure ainsi que tous les ions métal du matériau d'insertion positif, tels que les ions Li+ dans un accumulateur au lithium, puissent venir migrer vers l'électrode négative et ainsi s'intercaler dans la structure. Outre l'alignement de l'électrode positive avec l'électrode négative, on peut également augmenter la surface de l'électrode négative comparativement à l'électrode positive. Cela peut correspondre à une bande de matériau actif, rajoutée sur chaque côté de l'électrode négative. Une bande rajoutée peut typiquement avoir une largeur de 1mm.

Les avantages d'un accumulateur ou batterie avec un élément d'instrumentation selon l'invention comparativement aux accumulateurs instrumentés selon l'état de l'art sont nombreux parmi lesquels on peut citer :
- un procédé de fabrication plus simple car consistant en un scellage thermique directement entre un collecteur de courant et une fine couche de métal formant une bande déposée sur le séparateur de l'accumulateur et reliant à l'élément d'instrumentation,
- une résistance de contact électrique plus faible au niveau de la jonction de par une surface de contact plus élevée du fait de la liaison par un polymère électriquement conducteur entre le collecteur de courant et la bande reliant à l'élément d'instrumentation.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] la figure 1 est une vue schématique en perspective éclatée montrant les différents éléments d'un accumulateur lithium-ion dont un élément d'instrumentation.
[Fig 2] la figure 2 est une vue de face montrant un accumulateur lithium-ion avec son emballage souple selon l'état de l'art avec un élément d'instrumentation.
[Fig 3] la figure 3 est une vue en perspective d'un accumulateur lithium-ion avec son emballage souple selon l'état de l'art avec un élément d'instrumentation.
[Fig 4] la figure 4 est une vue schématique en perspective d'un exemple de languette métallique déposée directement sur un séparateur d'accumulateur lithium-ion, et reliée à un élément d'instrumentation de l'accumulateur telle qu'elle est soudée ou collée à un collecteur de courant selon l'état de l'art.
[Fig 5] la figure 5 est une vue schématique en perspective d'un exemple de languette métallique déposée directement sur un séparateur d'accumulateur lithium-ion, et reliée à un élément d'instrumentation de l'accumulateur telle qu'elle est scellée thermiquement à un collecteur de courant selon l'invention.
[Fig 6] la figure 6 est une reproduction d'une vue photographique d'un exemple de languette en or déposée directement sur un séparateur polyoléfine, et reliée à un élément d'instrumentation de l'accumulateur telle qu'elle est scellée thermiquement à un collecteur de courant en aluminium selon l'invention.
[Fig 7] la figure 7 est une reproduction d'une autre vue photographique de l'exemple selon la figure 6.

### Description détaillée

Par souci de clarté, les mêmes références désignant les mêmes éléments d'un système électrochimique ou accumulateur selon l'état de l'art et d'un système électrochimique ou accumulateur selon l'invention sont utilisées pour toutes les figures 1 à 7.

On précise que les différents éléments selon l'invention sont représentés uniquement par souci de clarté et qu'ils ne sont pas à l'échelle.

Les figures 1 à 4 ont déjà été commentées en préambule. Elles ne seront donc pas détaillées ci-après.

L'invention est décrite ci-après en référence à un exemple de réalisation d'une liaison électrique selon l'invention entre une languette formant un collecteur de courant 7 et une bande électriquement conductrice 10 selon l'invention.

La bande électriquement conductrice 10 est déposée directement sur un film polyoléfine 1 destiné à former un séparateur d'accumulateur métal-ion et reliée électriquement à un élément d'instrumentation 9 pour l'accumulateur qui est supporté directement par le film séparateur 1.

Dans cet exemple, le film polyoléfine est un séparateur Celgard^{®} de référence C2320.

La bande 10 est constituée d'une couche d'or d'épaisseur comprise entre 50 et 300 nm. De préférence, la bande 10 a une longueur de 70 mm et une largeur de 2 mm et comprend une base de 5 mm de long et de 4 mm de large pour réaliser la jonction avec le collecteur de courant 7.

Le collecteur de courant utilisé 7 est un feuillard d'aluminium dont les deux faces ont été traitées au préalable par gravure. L'épaisseur du collecteur de courant 7 est de 30 µm.

Le collecteur de courant 7 a une longueur de 30 mm et une largeur de 4 mm. En pratique, la longueur du collecteur de courant doit être suffisamment grande pour d'une part pouvoir être relié à la bande conductrice 10 avec une section de passage du courant suffisamment importante pour réduire les résistances de contacts et éviter les échauffements, et d'autre part pouvoir constituer ou être relié à une languette supplémentaire dans le cas d'un emballage souple d'accumulateur ou à la borne auxiliaire dans le cas d'un emballage rigide.

La largeur du collecteur de courant 7 est de préférence supérieure ou égale à la largeur de la bande conductrice 10 et doit être également de préférence supérieure ou égale à la largeur de la languette supplémentaire ou de la borne auxiliaire pour permettre leur soudure.

Pour connecter électriquement le collecteur de courant 7 à la bande conductrice 10 du séparateur polyoléfine 1, un polymère thermofusible et électriquement conducteur 11 est mis en oeuvre.

Le film 11 thermofusible et électriquement conducteur choisi est de composition PP chargé en noir de carbone à un pourcentage massique de 40%, de référence « CC00024002BG - 46-BK-80 BK PP MASTERBATCH » de la compagnie POLYONE.

Ce film 11 a été préalablement mis en oeuvre à partir de granules par pressage à chaud à 200°C sous 0,5 MPa pendant 30 secondes. L'épaisseur du film obtenue est de 500 µm.

Le scellage thermique est réalisé par l'intermédiaire d'une thermoscelleuse de référence TP-701-B Heat Seal Tester de la compagnie Tester Sangyo Co. La température du mors inférieur de la thermoscelleuse est fixée à 155°C tandis que celle du mors supérieur est fixée à 158°C.

Le film 11 thermofusible et électriquement conducteur est intercalé entre le film du séparateur en polyoléfine 1 supportant la bande conductrice 10 et le collecteur de courant en aluminium 7.

Le film séparateur en polyoléfine 1 est placé du côté du mors inférieur et le collecteur de courant en aluminium 7 est placé du côté du mors supérieur. Le scellage thermique s'effectue à pression de 0,5 MPa pendant 5 secondes.

On obtient donc ainsi une jonction 11 de scellage thermique entre la bande conductrice 10 déposées sur un film séparateur en polyoléfine 1 et le collecteur de courant en aluminium 7.

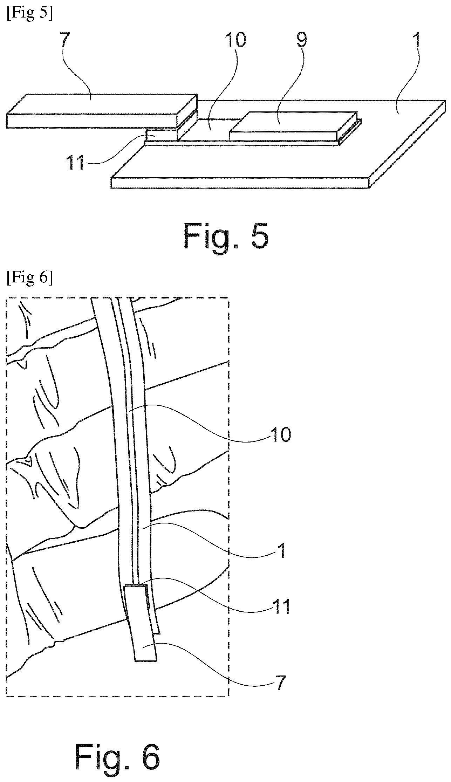

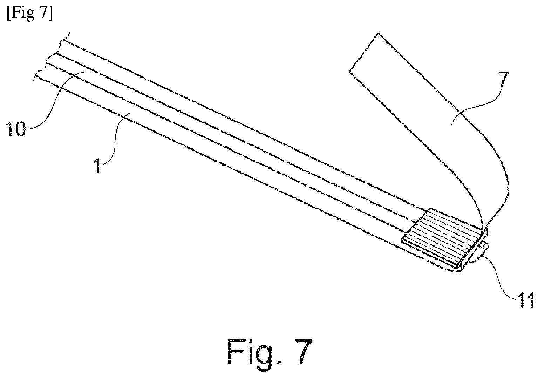

Les figures 6 et 7 représentent l'ensemble ainsi assemblé par scellage thermique : la bande conductrice 10 déposée sur un film 1 polyoléfine Celgard^{®} relié mécaniquement et électriquement au collecteur de courant en aluminium 7 par l'intermédiaire du film polymère 11.

La conduction électronique a été vérifiée entre la bande conductrice 10 et le collecteur de courant 7 par simple mesure de résistance, ce qui confirme que la jonction 11 est électroniquement conductrice.

L'invention n'est pas limitée aux exemples qui viennent d'être décrits ; on peut notamment combiner entre elles des caractéristiques des exemples illustrés au sein de variantes non illustrées.

D'autres variantes et améliorations peuvent être envisagées sans pour autant sortir du cadre de l'invention telle que définie par les revendications.

### Liste des références citées

[1]: H. Wu, D. Zhuo, D. Kong, et Y. Cui, « Improving battery safety by early détection of internal shorting with a bifunctional separator », Nat. Commun., vol. 5, p. 5193, oct. 2014.

## Revendications

1. Système électrochimique comprenant :
- au moins un film de polymère isolant électriquement (1);
- au moins une bande électriquement conductrice (10) déposée directement sur le film de polymère isolant électriquement;
- au moins une languette formant un collecteur de courant (7) scellé thermiquement à la bande électriquement conductrice (10) par un polymère thermofusible et électriquement conducteur (11).

2. Système selon la revendication 1, le film de polymère électriquement isolant étant un séparateur d'une cellule électrochimique du système.

3. Système selon l'une des revendications 1 ou 2, le film de polymère électriquement isolant étant un film microporeux polymère monocouche ou multicouches à base de polyoléfine, de préférence en polypropylène (PP) et ses dérivés ou/et en polyéthylène (PE) et ses dérivés.

4. Système selon l'une des revendications précédentes, le polymère thermofusible et électriquement conducteur étant un élastomère de type polypropylène (PP) et ses dérivés et/ou polyéthylène (PE) et ses dérivés.

5. Système selon l'une des revendications 1 à 3, le polymère thermofusible et électriquement conducteur étant un thermoplastique de type polyamide (PA) ou poly(téréphtalate d'éthylène) (PET) ou polyéther éther cétone (PEEK) et ses dérivés ou polysulfone (PS) et ses dérivés.

6. Système selon l'une des revendications précédentes, le polymère thermofusible électriquement conducteur étant un composé comprenant un polymère thermofusible comprenant au moins une charge électriquement conductrice de préférence à base de carbone.

7. Système selon la revendication 6, la charge électriquement conductrice à base de carbone étant choisie parmi le noir de carbone, les fibres de carbone, les nanotubes de carbone, le graphite, le graphène et leurs dérivés, ou un mélange de ces composés carbonés, ou étant à base d'un métal, de préférence sous la forme de fils métalliques en aluminium, cuivre ou nickel.

8. Système selon la revendication 6 ou 7, le taux de chargement en charge électriquement conductrice du polymère thermofusible étant compris entre 5 et 95 % de la masse totale du composé, avantageusement encore compris entre 15 et 55 % massique et encore plus avantageusement entre 25 et 45 % de la masse totale du composé.

9. Système selon l'une des revendications précédentes, le polymère thermofusible électriquement conducteur étant sous la forme de granulés ou d'un film avantageusement mis en oeuvre préalablement au scellement thermique.

10. Système selon la revendication 9, le film polymère thermofusible électriquement conducteur ayant une épaisseur comprise entre 20 et 500 µm, avantageusement comprise entre 50 et 200 µm.

11. Système selon l'une des revendications précédentes, l'épaisseur du collecteur de courant (7) étant comprise entre 6 et 500µm.

12. Système selon l'une des revendications précédentes, le collecteur de courant (7) étant métallique, de préférence en aluminium, en cuivre, en nickel en cuivre nickelé, ou en acier inoxydable.

13. Système selon la revendication 12, le collecteur de courant étant en aluminium dont au moins l'une des faces est traitée par gravure.

14. Accumulateur électrochimique (A) métal-ion, constitué à partir d'un système électrochimique selon l'une des revendications 2 à 13, comprenant un empilement des éléments suivants:
- au moins une électrode positive (4);
- au moins une électrode négative (5);
- au moins un film de séparateur isolant électriquement (1), intégrant un électrolyte, agencé en contact avec l'électrode négative et l'électrode positive;
- au moins une bande électriquement conductrice (10) déposée directement sur le film de polymère isolant électriquement ;
- au moins un élément d'instrumentation (9) de l'accumulateur, supporté par le film de séparateur (1) et relié électriquement à la bande électriquement conductrice ;
- au moins une languette formant un collecteur de courant (7) scellé thermiquement par un polymère électriquement conducteur à la bande électriquement conductrice (10) ;
- un emballage souple (8) agencé pour contenir les électrodes négative et positive, le film de séparateur, l'élément d'instrumentation et la bande électriquement conductrice, avec étanchéité tout en étant traversé par le collecteur de courant (7), un ruban d'étanchéité (80) étant soudé au collecteur de courant (7) et scellé thermiquement à l'emballage souple (8).

15. Accumulateur électrochimique (A) métal-ion, constitué à partir d'un système électrochimique selon l'une des revendications 2 à 13, comprenant un empilement des éléments suivants:
- au moins une électrode positive (4);
- au moins une électrode négative (5);
- au moins un film de séparateur isolant électriquement (1), intégrant un électrolyte, agencé en contact avec l'électrode négative et l'électrode positive;
- au moins une bande électriquement conductrice (10) déposée directement sur le film de polymère isolant électriquement ;
- au moins un élément d'instrumentation (9) de l'accumulateur, supporté par le film de séparateur (1) et relié électriquement à la bande électriquement conductrice ;
- au moins une languette formant un collecteur de courant (7) scellé thermiquement par un polymère électriquement conducteur à la bande électriquement conductrice (10) ;
- un emballage rigide (8) agencé pour contenir les électrodes négative et positive, le film de séparateur, l'élément d'instrumentation et la bande électriquement conductrice, le collecteur de courant (7) étant soudé à une borne de sortie auxiliaire de l'emballage rigide (8).

## Patentansprüche

1. Elektrochemisches System, beinhaltend:
- mindestens eine elektrisch isolierende Polymerfolie (1) ;
- mindestens einen elektrisch leitenden Streifen (10), der direkt auf die elektrisch isolierende Polymerfolie aufgebracht wird;
- mindestens eine Fahne, die einen Stromabnehmer (7) bildet, der durch ein elektrisch leitendes Heißschmelzpolymer (11) mit dem elektrisch leitenden Streifen (10) durch thermisches Versiegeln verbunden wird.

2. System nach Anspruch 1, wobei die elektrisch isolierende Polymerfolie ein Trennelement einer elektrochemischen Zelle des Systems ist.

3. System nach einem der Ansprüche 1 oder 2, wobei die elektrisch isolierende Polymerfolie eine einschichtige oder mehrschichtige mikroporöse Polymerfolie auf Polyolefinbasis, vorzugsweise aus Polypropylen (PP) und dessen Derivaten und/oder aus Polyethylen (PE) und dessen Derivaten, ist.

4. System nach einem der vorhergehenden Ansprüche, wobei das elektrisch leitende Heißschmelzpolymer ein Elastomer vom Typ Polypropylen (PP) und dessen Derivaten und/oder Polyethylen (PE) und dessen Derivaten ist.

5. System nach einem der Ansprüche 1 bis 3, wobei das elektrisch leitende Heißschmelzpolymer ein Thermoplast vom Typ Polyamid (PA) oder Poly(ethylenterephthalat) (PET) oder Polyetheretherketon (PEEK) und dessen Derivaten oder Polysulfon (PS) und dessen Derivaten ist.

6. System nach einem der vorhergehenden Ansprüche, wobei das elektrisch leitende Heißschmelzpolymer eine Verbindung ist, die ein Heißschmelzpolymer beinhaltet, das mindestens einen elektrisch leitenden Füllstoff vorzugsweise auf Kohlenstoffbasis beinhaltet.

7. System nach Anspruch 6, wobei der elektrisch leitende Füllstoff auf Kohlenstoffbasis aus Industrieruß, Kohlenstofffasern, Kohlenstoffnanoröhren, Graphit, Graphen und deren Derivaten oder einer Mischung aus diesen Kohlenstoffverbindungen ausgewählt ist oder auf einem Metall, vorzugsweise in der Form von Metalldrähten aus Aluminium, Kupfer oder Nickel, basiert.

8. System nach Anspruch 6 oder 7, wobei der Füllanteil des elektrisch leitenden Füllstoffs des Heißschmelzpolymers zwischen 5 und 95 % der Gesamtmasse der Verbindung, vorteilhafterweise zwischen 15 und 55 Masse-% und noch vorteilhafterweise zwischen 25 und 45 % der Gesamtmasse der Verbindung beträgt.

9. System nach einem der vorhergehenden Ansprüche, wobei das elektrisch leitende Heißschmelzpolymer in der Form von Granulaten oder einer Folie, die vorteilhafterweise vor der thermischen Versiegelung geschaffen wird, vorliegt.

10. System nach Anspruch 9, wobei die elektrisch leitende Heißschmelzpolymerfolie eine Dicke zwischen 20 und 500 pm, vorteilhafterweise zwischen 50 und 200 pm, aufweist.

11. System nach einem der vorhergehenden Ansprüche, wobei die Dicke des Stromabnehmers (7) zwischen 6 und 500 µm beträgt.

12. System nach einem der vorhergehenden Ansprüche, wobei der Stromabnehmer (7) metallisch ist und vorzugsweise aus Aluminium, aus Kupfer, aus Nickel, aus vernickeltem Kupfer oder aus Edelstahl besteht.

13. System nach Anspruch 12, wobei der Stromabnehmer aus Aluminium ist, von dem mindestens eine der Seiten durch Ätzen behandelt wird.

14. Elektrochemischer Metall-Ionen-Akkumulator (A), der aus einem elektrochemischen System nach einem der Ansprüche 2 bis 13 gebildet ist und eine Übereinanderschichtung der folgenden Elemente beinhaltet:
- mindestens einer positiven Elektrode (4);
- mindestens einer negativen Elektrode (5);
- mindestens einer elektrisch isolierenden Trennfolie (1), die einen Elektrolyten integriert und mit der negativen Elektrode und der positiven Elektrode in Kontakt angeordnet ist;
- mindestens eines elektrisch leitenden Streifens (10), der direkt auf die elektrisch isolierende Polymerfolie aufgebracht ist;
- mindestens eines Instrumentierungselements (9) des Akkumulators, das von der Trennfolie (1) gestützt wird und mit dem elektrisch leitenden Streifen elektrisch verbunden ist;
- mindestens einer Fahne, die einen Stromabnehmer (7) bildet, der durch ein elektrisch leitendes Polymer mit dem elektrisch leitenden Streifen (10) durch thermisches Versiegeln verbunden ist;
- einer flexiblen Verpackung (8), die dazu angeordnet ist, die negative und die positive Elektrode, die Trennfolie, das Instrumentierungselement und den elektrisch leitenden Streifen dicht einzuschließen, und dabei von dem Stromabnehmer (7) durchquert wird, wobei ein Dichtband (80) an den Stromabnehmer (7) geschweißt und mit der flexiblen Verpackung (8) durch thermisches Versiegeln verbunden ist.

15. Elektrochemischer Metall-Ionen-Akkumulator (A), der aus einem elektrochemischen System nach einem der Ansprüche 2 bis 13 gebildet ist und eine Übereinanderschichtung der folgenden Elemente beinhaltet:
- mindestens einer positiven Elektrode (4);
- mindestens einer negativen Elektrode (5);
- mindestens einer elektrisch isolierenden Trennfolie (1), die einen Elektrolyten integriert und mit der negativen Elektrode und der positiven Elektrode in Kontakt angeordnet ist;
- mindestens eines elektrisch leitenden Streifens (10), der direkt auf die elektrisch isolierende Polymerfolie aufgebracht ist;
- mindestens eines Instrumentierungselements (9) des Akkumulators, das von der Trennfolie (1) gestützt wird und mit dem elektrisch leitenden Streifen elektrisch verbunden ist;
- mindestens einer Fahne, die einen Stromabnehmer (7) bildet, der durch ein elektrisch leitendes Polymer mit dem elektrisch leitenden Streifen (10) durch thermisches Versiegeln verbunden ist;
- einer starren Verpackung (8), die dazu angeordnet ist, die negative und die positive Elektrode, die Trennfolie, das Instrumentierungselement und den elektrisch leitenden Streifen einzuschließen, wobei der Stromabnehmer (7) an einen Hilfsausgangsanschluss der starren Verpackung (8) geschweißt ist.

## Claims

1. Electrochemical system comprising:
- at least one electrically-insulating polymer film (1) ;
- at least one electrically-conductive strip (10) deposited directly on the electrically-insulating polymer film;
- at least one tab forming a current collector (7) heat-sealed to the electrically-conductive strip (10) by a hot-melt electrically-conductive polymer(11).

2. System according to Claim 1, in which the electrically-insulating polymer film is a separator of an electrochemical cell of the system.

3. System according to either of Claims 1 and 2, in which the electrically-insulating polymer film is a single-layer or multilayer microporous polymer film based on polyolefin, preferably polypropylene (PP) and its derivatives and/or polyethylene (PE) and its derivatives.

4. System according to one of the preceding claims, in which the hot-melt electrically-conductive polymer is an elastomer of the type: polypropylene (PP) and its derivatives and/or polyethylene (PE) and its derivatives.

5. System according to one of Claims 1 to 3, in which the hot-melt electrically-conductive polymer is a thermoplastic of the type: polyamide (PA) or poly(ethylene terephthalate) (PET) or polyether ether ketone (PEEK) and its derivatives or polysulfone (PS) and its derivatives.

6. System according to one of the preceding claims, in which the hot-melt electrically-conductive polymer is a compound comprising a hot-melt polymer comprising at least one electrically-conductive filler preferably based on carbon.

7. System according to Claim 6, in which the carbon-based electrically-conductive filler is chosen from carbon black, carbon fibres, carbon nanotubes, graphite, graphene and derivatives thereof, or a mixture of these carbon-based compounds, or is based on a metal, preferably in the form of metal wires made of aluminium, copper or nickel.

8. System according to Claim 6 or 7, in which the degree of filling of the hot-melt polymer with electrically-conductive filler is between 5% and 95% of the total weight of the compound, more advantageously between 15% and 55% by weight and even more advantageously between 25% and 45% of the total weight of the compound.

9. System according to one of the preceding claims, in which the hot-melt electrically-conductive polymer is in the form of granules or a film advantageously produced prior to the heat sealing.

10. System according to Claim 9, in which the hot-melt electrically-conductive polymer film has a thickness of between 20 and 500 µm, advantageously between 50 and 200 µm.

11. System according to one of the preceding claims, in which the thickness of the current collector (7) is between 6 and 500 µm.

12. System according to one of the preceding claims, in which the current collector (7) is metallic, preferably made of aluminium, copper, nickel, copper-nickel, or stainless steel.

13. System according to Claim 12, in which the current collector is made of aluminium, at least one of the faces of which is treated by etching.

14. Metal-ion electrochemical battery (A), formed from an electrochemical system according to one of Claims 2 to 13, comprising a stack of the following elements:
- at least one positive electrode (4);
- at least one negative electrode (5);
- at least one electrically-insulating separator film (1), incorporating an electrolyte, arranged in contact with the negative electrode and the positive electrode;
- at least one electrically-conductive strip (10) deposited directly on the electrically-insulating polymer film;
- at least one instrumentation element (9) of the battery, supported by the separator film (1) and electrically connected to the electrically-conductive strip;
- at least one tab forming a current collector (7) heat sealed by an electrically-conductive polymer to the electrically-conductive strip (10);
- a flexible packaging (8) arranged to contain the negative and positive electrodes, the separator film, the instrumentation element and the electrically-conductive strip, in a leaktight manner while being passed through by the current collector (7), a sealing tape (80) being welded to the current collector (7) and heat sealed to the flexible packaging (8).

15. Metal-ion electrochemical battery (A), formed from an electrochemical system according to one of Claims 2 to 13, comprising a stack of the following elements:
- at least one positive electrode (4);
- at least one negative electrode (5);
- at least one electrically-insulating separator film (1), incorporating an electrolyte, arranged in contact with the negative electrode and the positive electrode;
- at least one electrically-conductive strip (10) deposited directly on the electrically-insulating polymer film;
- at least one instrumentation element (9) of the battery, supported by the separator film (1) and electrically connected to the electrically-conductive strip;
- at least one tab forming a current collector (7) heat sealed by an electrically-conductive polymer to the electrically-conductive strip (10);
- a rigid packaging (8) arranged to contain the negative and positive electrodes, the separator film, the instrumentation element and the electrically-conductive strip, the current collector (7) being welded to the auxiliary output terminal of the rigid packaging (8).
